## Europäisches Patentamt

## European Patent Office

## Office européen des brevets

(11) Publication number: **0 158 245**
**A2**

# (12) EUROPEAN PATENT APPLICATION

(21) Application number: 85103826.5

(22) Date of filing: 29.03.85

(51) Int. Cl.⁴: **G 11 B 7/08**
**G 11 B 7/095**

(30) Priority: 30.03.84 JP 60646/84

(43) Date of publication of application:
16.10.85 Bulletin 85/42

(84) Designated Contracting States:
DE GB

(71) Applicant: HITACHI, LTD.
6, Kanda Surugadai 4-chome Chiyoda-ku
Tokyo 100(JP)

(72) Inventor: Ikoma, Junichi
3-3, Uragaoka-2-chome
Yokosuka-shi(JP)

(72) Inventor: Funakawa, Katsuo
204-go, Diapalace 17-8, Tomiokahigashi-1-chome
Kanazawa-ku Yokohama(JP)

(72) Inventor: Abe, Masayuki 502-go, Cityflats-shimizugaoka
192, Minamiotacho-2-chome
Minami-ku Yokohama(JP)

(72) Inventor: Ohnuki, Nobutaka
19-1, Minamiyukigaya-3-chome
Ota-ku Tokyo(JP)

(72) Inventor: Iwasaki, Naoya
242-go, Hachimanyama House 1545, Yoshidacho
Totsuka-ku Yokohama(JP)

(72) Inventor: Fukui, Yukio
501-go, Parkside-Machida 24-30 Haramachida-4-chome
Machida-shi(JP)

(72) Inventor: Okazaki, Kichizaemon
407-go, NIC Haimu-Totsuka 26-1, Nasecho
Totsuka-ku Yokohama(JP)

(72) Inventor: Miura, Yoshio
554-go, Hachimanyama-Apartment House, 1545
Yoshidacho Totsuka-fu Yokohama(JP)

(74) Representative: Frohwitter, Bernhard, Dipl.-Ing. et al,
Bardehle-Pagenberg-Dost-Altenburg & Partner Patent-
und Rechtsanwälte Galileiplatz 1 Postfach 86 06 20
8000 München 80(DE)

(54) Skip circuit for recorded information reproducing unit.

(57) A skip circuit for moving the pickup means from a track to another track at high speed is disclosed. The servo loop in the tracking servo system used for tracking the track during the movement between the tracks is interrupted and then the pickup means is moved to the object track. During the movement to the object track, the force which cancels the displacement force of the spring suspending the actuator used for tracking servo system is supplied to the actuator. After the predetermined number of tracks skipped has been counted, the servo loop is closed and the brake force is supplied to the actuator to stop the track movement.

F I G . 2

EP 0 158 245 A2

March 29, 1985
0158245EP

## SKIP CIRCUIT FOR RECORDED INFORMATION

## REPRODUCING UNIT

BACKGROUND OF THE INVENTION

The present invention relates to the special reproducing function of a recorded information reproducing unit such as an optical video disk player, and in particular to a skip circuit suitable to jumping to another track at high speed.

In an optical video disk player (hereafter abbreviated as VDP), the pickup means for reading out the information recorded on the disk must often be displaced from the track now under reproduction to another track which is several ten or several hundred tracks away. In such a case, a jumping operation for moving the pickup means by one track is repeated by a predetermined number in the skip circuit of the optical video disk player.

In one jumping operation, the tracking loop is turned off and at the same time an impulse is applied to the pickup means until a point of approximately half a track is reached. When the point has been found to be passed, the tracking loop is turned on. And at the same time, an impulse having the opposite sense and the same magnitude as compared with the previously applied impulse. As a result, the pickup means is moved to the adjacent track as disclosed in Japanese Patent Application Laid-Open No. 187086/83. Accordingly, the energy loss brought about during one jumping operation is automatically

0158245

corrected by the force from the tracking loop. However, it takes some time for the correction to be completed. Therefore, it is necessary to allow a margin time to some extent from the completion of the first jumping operation to the next jumping operation. Accordingly, the mean movement speed is considerably lowered as compared with the maximum movement speed, resulting in a drawback.

SUMMARY OF THE INVENTION

An ojbect of the present invention is to provide a skip circuit for recorded information reproducing unit capable of jumping over a large number of tracks at high speed.

In accordance with one feature of the present invention, therefore, the pickup means jumps a number of tracks in one jumping operation. That is to say, the first impulse is applied to the pickup means in the same way as one-track jumping. When the pickup means is half a track short of the object track, the second impulse is applied to the pickup means to draw it to the object track. However, the repulsive force of the spring suspending an actuator on which the pickup means is mounted lowers the movement speed. It thus becomes diffults to stop the pickup means by the second impulse. In order to eliminate the effect of the overhanging spring, therefore, the force according to the number of jumped tracks is applied to the actuator.

0158245

BRIEF DESCRIPTION OF THE DRAWINGS

Fig. 1 shows signal waveforms in a skipping operation of the prior art.

Fig. 2 is a block diagram of an embodiment of the present invention.

Fig. 3 shows signal waveforms appearing at various points in the block diagram of Fig. 2.

DESCRIPTION OF THE PREFERRED EMBODIMENT

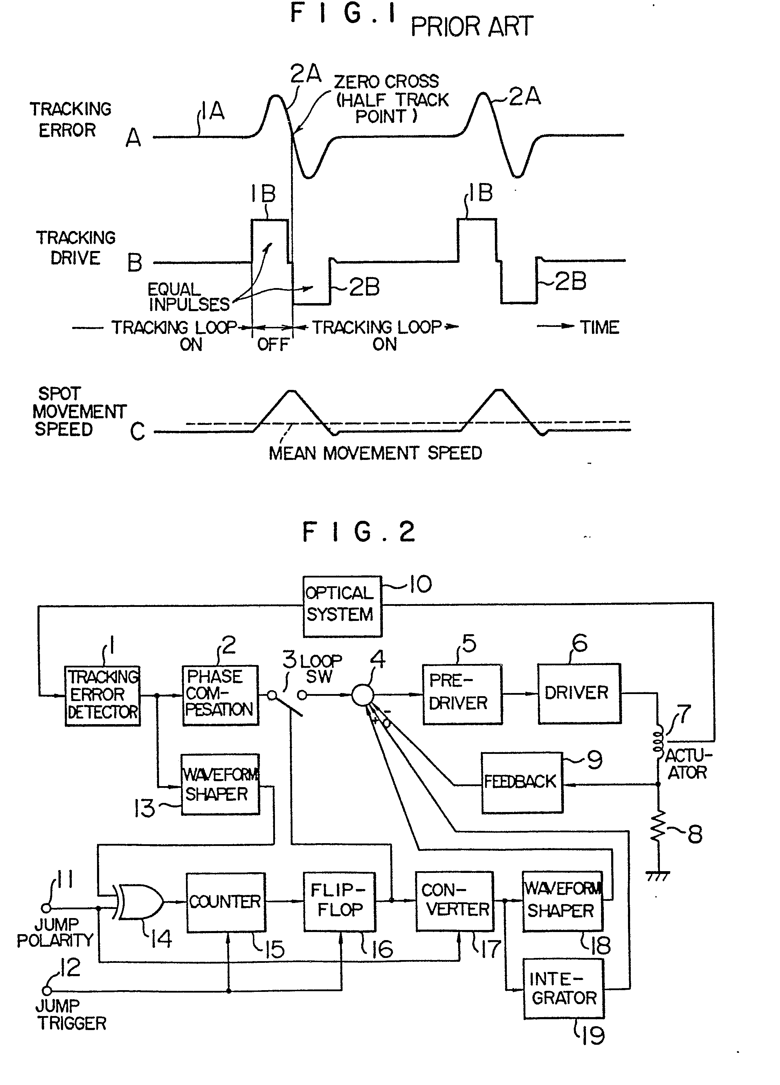

Prior to describing the skip circuit for recorded information reproducing unit according to the present invention, the operation for moving the track in the video disk player will now be described with reference to Fig. 1. The waveform A of Fig. 1 is the output waveform of a tracking error detector. When correct tracking is carried out in the normal reproduction operation, an output 1A having a constant level is obtained. For one track jumping, an output 2A having a cycle according to the track width is obtained. The waveform B shows the driving force for driving the actuator. And the waveform C shows the moving speed of a spot. In each of the waveforms B and C, the axis of abscissa represents the time. One jumping operation will now be described. The tracking loop is turned off. At the same time, an impulse 1B as illustrated in the waveform 1B is applied to the pickup means until a point of approximately half a track is reached. When it is detected that the pickup means has passed the point of half a track, the tracking loop is turned ON. And at the same time, an impulse 2B having the same magnitude as and the opposite polarity to the previously applied impulse 1B is applied to the pickup means to move it to the adjacent track. Therefore, the energy loss brought about during one jumping operation is automatically corrected by the force of the tracking loop. However, it takes some time for the correction to be completed.

The present invention raises the movement speed of the pickup means between tracks and makes the pickup means jump a large number of tracks at high speed.

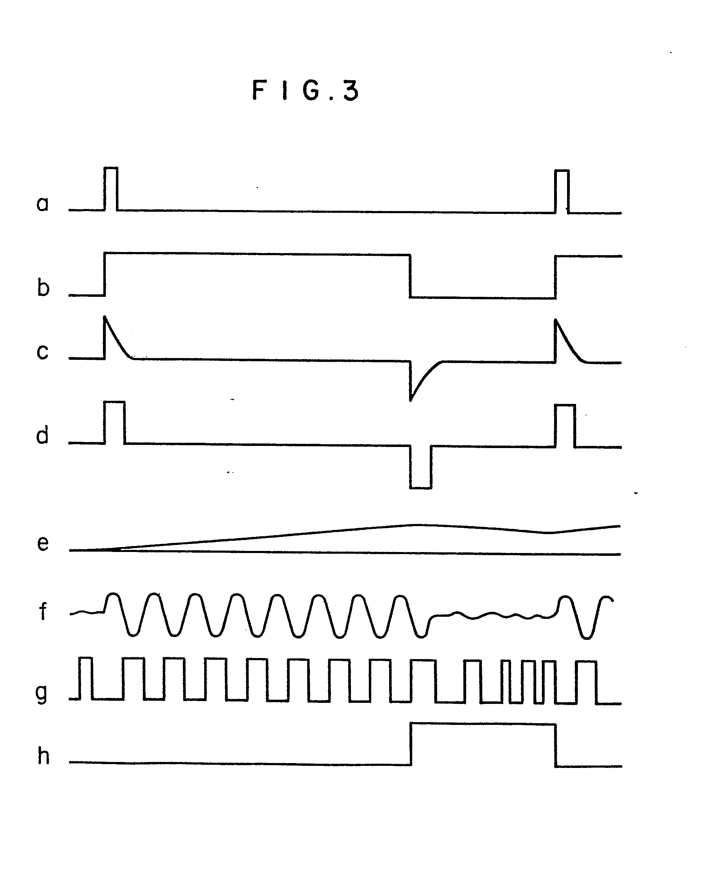

An embodiment of the present invention will now be described by referring to the block diagram of Fig. 2 and the signal waveform diagram of Fig. 3. A tracking error detector 1 generates a tracking error signal so as to make the error zero on a track and between tracks. This tracking error signal is amplified by a phase compensation amplifier 2 to be supplied to a loop switch 3. When the loop switch 3 is closed, the output of the phase compensation amplifier 2 is supplied to an adder 4. The output of the adder 4 is supplied to an actuator 7 via a predriver 5 and a driver 6 to excite the actuator 7. The current flowing through the actuator 7 is converted into a voltage by a current detection resistor 8. The resultant voltage is supplied to the adder 4 via a feedback circuit 9. Accordingly, the actuator 7 is driven by a current and produces the force in proportion to the current. The laser beam swung by the actuator 7 is returend to the tracking error detector 1 via an optical system 10, the tracking loop being formed. A jump polarity signal is supplied to a terminal 11. A jump trigger signal is supplied to a terminal 12. On the other hand, the tracking error signal is shaped into a square wave by a waveform shaper circuit 13. The effective edge of the resultant square wave is determined in an exclusive-OR circuit 14 by the jump polarity signal. The output of the exclusive-OR circuit 14 is supplied to a counter 15. Since the reset terminal of the counter 15 is supplied with the above-described jump trigger signal, the counter 15 is reset by the jump trigger signal. Therefore, the output of the counter 15 is raised when the effective edges of the tracking signal have been counted by a predetermined number after the jump trigger is supplied to the counter. The output of the counter 15 is supplied to the reset terminal of a set/reset flip-flop 16. The set terminal of the flip-flop 16 is provided for receiving the jump trigger signal. As a result, the signal appearing at the output terminal of the flip-flop 16 turns its high level at the application of the jump trigger signal and returns to its low level when the predetermined number of effective edges of the tracking error signal have been counted. The output of the flip-flop 16 is supplied to the loop switch 3 to turn OFF the loop while the output remains at it high level. The output of the flip-flop 16 is also supplied to an output voltage polarity converter circuit 17. The output of the converter circuit is switched between

- 6 -

0158245

its positive output and its negative output by the jump polarity signal. The output of the output voltage polarity converter circuit 17 is supplied to a differentiator and waveform shaper circuit 18 and an integrator circuit 19.

In the normal tracking state, a jump trigger a supplied to the circuit of Fig. 2 as illustrated in Fig. 3 changes the output of the flip-flop 16 to its high level as represented by b. Thereby the loop switch 3 is opened to turn OFF the tracking loop. At the same time, the output of the flip-flop 16 is sent to the output voltage polarity converter circuit 17. The output of the converter circuit 17 assumes the same polarity as that of the output of the flip-flop 16 either before or after the transition. Assuming now that the output polarity of the flip-flop circuit 16 is the same as that of the flip-flop 16, the differentiator and waveform shaper circuit 18 produce a waveform d by shaping a differentiated output as represented by c of Fig. 3. The output of the circuit 18 is supplied to the predriver 5 and amplified in the driver 6 to be supplied to the actuator 7. The actuator is accelerated with a constant acceleration. In addition, the output of the output voltage polarity converter circuit 17 is also supplied to the integrator circuit 19, which in turn produces an integrated output as illustrated by e in Fig. 3. If the force produced by the slope of the output of the integrator circuit 17 is so selected as to cancel the repulsive force of the spring suspending the actuator, the actuator is accelerated with a constant acceleration and thereafter operates with a constant speed as described before.

Since the actuator is energized with the tracking loop being OFF, the tracking error signal becomes a sinusoidal signal having the track width as one cycle as illustrated by f in Fig. 3. Edges generated while the pickup means is passing between tracks are seized by the waveform shaper circuit 13 and the exclusive-OR circuit 14. When the predetermined number of edges are counted in the counter 15, the counting operation is terminated at a point half a track short of the object track. At that point, the output of the counter 15 changes from its low level to its high level as illustrated by h in Fig. 3 to reset the set/reset flip-flop 16. The output of the flip-flop 16 closes the loop switch 3 to turn ON the loop. At the same time, the waveform shaper circuit 18 yields a pulse as illustrated by d in Fig. 3 which is the same in the height and area as and opposite in polarity to the pulse during acceleration. By the pulse, the actuator 7 begins to be decelerated and reaches the zero speed when the pulse has been terminated. It is not assured that the pickup means is then located on the object track. Since the tracking loop is turned on concurrently with the deceleration, however, the pickup means is positively settled on the object track by the loop compensation. Skipping operation in one direction has heretofore been described. Even if the tracks are skipped in the other direction, however, the polarities

- 8 -

0158245

of the logic circuit 14 and the polarity inverter circuit are inverted. In the output of the logic circuit 14, therefore, the edges generated while the pickup means is passing between tracks have the same sense as before. The polarity converter circuit 17 produces pulses which are opposite in polarity to the output of the flip-flop 16. The waveform shaper circuit 18 and the integrator circuit 19 produce signals which are completely opposite to those illustrated in Fig. 3. Thus, the skipping operation to the object track is performed in the same wasy as before.

In accordance with the present invention described above, two or more tracks are skipped in one skipping operation. Excepting the acceleration and deceleration periods, the highest speed is maintained. In addition, the highest speed is the same as the case of track-by-track jumping. As a result, the track settlement can be carried out in a short time and with ease.

CLAIMS

1.      In a skip circuit of a recorded information reproducing unit for taking out as signals the change in light reflected by a surface holding the information on tracks thereof, including operation steps;

applying a first impulse having a predetermined magnitude to a tracking servo actuator (7) concurrently with interrupting the loop of a tracking servo system for tracking the track,

moving the actuator by nearly half a track until the first impulse is terminated,

closing the loop at a point nearly half a track short of the object track, and

applying a second impulse which is equal in magnitude and opposite in sense to the first impulse to the actuator so as to effect the servo system on the object track;

a skip circuit of a recorded information reproducing unit for skipping two or more tracks in one skipping operation, comprising:

spring force correction means (19) for supplying the actuator with such force as to substantially cancel the force according to the displacement of the spring suspending the actuator during skipping; and

counting means (15) for counting the tracking errors from the start of skipping so as to enable application of the second impulse with correct timing.

0158245

2.    In a skip circuit of a recorded information reproducing unit for taking out as signals the change in light reflected by a surface holding the information on tracks thereof, including operation steps;

applying a first impulse having a predetermined magnitude to a tracking servo actuator (7) concurrently with interrupting the loop of a tracking servo system for tracking the track,

moving the actuator by nearly half a track until the first impulse is terminated,

closing the loop at a point nearly half a track short of the object track, and

applying a second impulse which is equal in magnitude and opposite in sense to the first impulse to the actuator so as to effect the servo system on the object track;

3.    A skip circuit of a recorded information reproducing unit for skipping two or more tracks in one skipping operation, comprising:

spring force correction means (19) for supplying the actuator with such force as to substantially cancel the force according to the displacement of the spring suspending the actuator during skipping; and

counting means (15) for counting the tracking errors from the start of skipping so as to enable application of the second impulse with correct timing.

## F I G . I  PRIOR ART

TRACKING ERROR A

2A ZERO CROSS (HALF TRACK POINT)

TRACKING DRIVE B

EQUAL INPULSES

TRACKING LOOP ON — OFF — TRACKING LOOP ON — TIME

SPOT MOVEMENT SPEED C

MEAN MOVEMENT SPEED

## F I G . 2

OPTICAL SYSTEM 10

1 TRACKING ERROR DETECTOR

2 PHASE COMPESATION

3 LOOP SW

4

5 PRE-DRIVER

6 DRIVER

7 ACTUATOR

8

9 FEEDBACK

13 WAVEFORM SHAPER

11 JUMP POLARITY

12 JUMP TRIGGER

14

COUNTER 15

FLIP-FLOP 16

CON-VERTER 17

WAVEFORM SHAPER 18

INTE-GRATOR 19

0158245

FIG.3